# EUROPEAN PATENT APPLICATION

(11) **EP 4 581 917 A1**
(43) Date of publication of application: **09.07.2025**
(21) Application number: 24216998.5
(22) Date of filing: 03.12.2024
(51) Int. Cl.: A01C 7/00, A01C 7/20, A01B 23/06

(54) **SEEDER ASSEMBLY**

(30) Priority: 04.01.2024 US 202418404581
(71) Applicant: Deere & Company, Moline, IL 61265 (US)
(72) Inventor: Garner, Elijah B., Mannheim (DE); Dhobale, Dnyanesh K., Mannheim (DE)
(74) Representative: Reichert, Christian

(57) **Abstract**

A seeder assembly (100) for placing a commodity in underlying soil is disclosed. The seeder assembly comprising:
a frame (104) having at least one ground engaging mechanism (106) configured to contact an underlying surface;
at least one opener assembly (114) pivotally coupled to the frame (104), the at least one opener assembly having at least one disk opener (202) configured to cut into the underlying soil to provide an opening for the commodity;
at least one row cleaner assembly (210) coupled to the frame, the at least one row cleaner assembly having at least one cleaner blade (216) pivotably movable between at least an engaged position and a lifted position,
wherein the at least one cleaner blade (216) is positioned above a plane (600) defined by a bottom portion of the at least one opener assembly (114) when the at least one cleaner blade (216) is in the lifted position.

## Description

### BACKGROUND

Row cleaners may be utilized before seed openers in planting equipment. Row cleaners clear residue, clods, rocks, or other debris on a field and allow opener blades or shanks to penetrate cleaner ground. That is, operation of row cleaners provide a relatively smoother surface for the openers to reference (e.g. gage off of) and to cut into. Thus, row cleaners reduce hairpinning of residue into a furrow. With hairpinning, residue is wedged into the opening and a seed or commodity is deposited on top of the residue. The seed or commodity consequently fails to perform as expected. In addition, removal of debris may expose soil to sunlight, which allows more heat to penetrate the solid to foster quicker and more reliable seed germination.

### SUMMARY

This Summary is provided to introduce a selection of concepts in a simplified form that are further described below in the Detailed Description. This Summary is not intended to identify key factors or essential features of the claimed subject matter, nor is it intended to be used to limit the scope of the claimed subject matter.

In one implementation, a seeder assembly for placing a commodity in underlying soil is provided. The seeder assembly includes a frame having at least one ground engaging mechanism configured to contact an underlying surface. The seeder assembly also includes at least one opener assembly pivotally coupled to the frame, the at least one opener having at least one disk opener configured to cut into the underlying soil to provide an opening for the commodity. In addition, the seeder assembly includes at least one row cleaner assembly coupled to the frame, the at least one row cleaner having at least one cleaner blade pivotably movable between at least an engaged position and a lifted position. Further, the at least one cleaner blade is positioned above a plane defined by a bottom portion of the at least one opener assembly when the at least one cleaner blade is in the lifted position.

In another implementation, a row cleaner assembly is provided. The row cleaner assembly includes a first arm having an engagement portion configured to couple to at least one of an opener assembly or a seed assembly. The row cleaner assembly also includes a second arm having at least one cleaner blade rotationally coupled thereto. In addition, the row cleaner assembly includes a pivot formed between the first arm and the second arm, wherein a rotational axis of the pivot is canted relative to an axis of the row cleaner assembly.

In yet another implementation, a row cleaner assembly is provided. The row cleaner assembly includes a first arm having an engagement portion at a first end and an angled portion at a second end. The engagement portion is configured to couple the row cleaner assembly to at least one of an opener assembly or a seed assembly. The angled portion is angled with respect to at least two axes of the row cleaner assembly. The row cleaner assembly also includes a second arm having a first end coupled to the angled portion at the second end of the first arm to form a pivot. The second arm extends from the pivot in a direction substantially counter to a traveling direction. In addition, the row cleaner assembly includes a pair of row cleaner blades rotationally coupled to a second end of the second arm. A first row cleaner blade is mounted on a first side of the second end of the second arm and a second row cleaner blade is mounted on a second side, opposed from the first side. Further, the row cleaner assembly includes an actuator configured to pivotably transition the pair of row cleaner blades between a working position and a retracted position. The actuator further provides springing force to enable partial deflection of the pair of row cleaner blades from full engagement in the working position.

To the accomplishment of the foregoing and related ends, the following description and annexed drawings set forth certain illustrative aspects and implementations. These are indicative of but a few of the various ways in which one or more aspects may be employed. Other aspects, advantages and novel features of the disclosure will become apparent from the following detailed description when considered in conjunction with the annexed drawings.

### BRIEF DESCRIPTION OF THE DRAWINGS

Various non-limiting embodiments are further described in the detailed description given below with reference the accompanying drawings, which are incorporated in and constitute a part of the specification.
Fig. 1 illustrates an exemplary, non-limiting implementation of a seeder assembly according to various aspects.
Fig. 2 illustrates an exemplary, non-limiting implementation of an opening assembly with associated cleaner assembly according to an aspect.
Fig. 3 illustrates an exemplary, non-limiting implementation of an opening assembly with associated cleaner assembly according to an aspect.
Fig. 4 illustrates an exemplary, non-limiting implementation of a cleaner assembly according to various aspects.
Fig. 5 illustrates an exemplary, non-limiting implementation of a cleaner assembly according to various aspects.
Fig. 6 illustrates an exemplary, non-limiting implementation of an opening assembly with associated cleaner assembly according to an aspect.
Fig. 7 illustrates an exemplary, non-limiting implementation of an opening assembly with associated cleaner assembly according to an aspect.
Fig. 8 illustrates an exemplary, non-limiting implementation of an opening assembly with associated cleaner assembly according to an aspect.
Fig. 9 illustrates an exemplary, non-limiting implementation of an opening assembly with associated cleaner assembly according to an aspect.

### DETAILED DESCRIPTION

As described above, row cleaners improve the functioning of openers and lead to better performance of seeds or commodities. Typical row cleaners, aftermarket or otherwise, often provide a single-bladed design. These solutions sweep trash (e.g. residue, clods, rocks, etc.) to one side ahead of a corresponding opener. Single-bladed designs, however, often produce a rough field finish. For instance, single-bladed cleaners may result in the clumping of residue and/or excessive residue coverage of leading rows by trailing rows. This typically results from excessive soil throw For a single-bladed cleaner to function, the blade typically moves trash farther in a single direction than a twin-bladed design. The farther throw exacerbates forward-row coverage by trailing rows. In addition, single-bladed design may create a situation where a handed-ness of an opener changes (e.g. right-handed to left-handed or vice versa). The change may occur internally on the machine or at a "guess row" where one pass of the seeding machine juxtaposes another. In these situations, an extra large windrow may be created between adjacent rows because this area becomes overloaded with all trash cleaned from adjacent rows.

According to an aspect, twin-bladed row cleaners improve the ability of opener blades penetrate soil by removing residue or to cut residue that is stretched tightly just ahead of the blades. In addition, twin blades remove residue more evenly to both sides of each opener. Accordingly, twin cleaner blades minimize soil throw, especially at speed, and, thus, minimize excessive windrowing between hand-changes of openers within a machine and/or between passes. Twin-bladed cleaners also minimize coverage of primary rows by secondary rows.

In another aspect, row cleaners can be mounted to a leading pivot in an off-axis arrangement, or to a leading pivot with a special rotating cam. With this arrangement the row cleaners can be closely coupled to the openers to improve opener functionality. In addition, this arrangement minimizes encroachment into the space utilized for maintenance and adjustments. Further, off-axis tilt or cammed rotation allows cleaner blades to be positioned optimally for normal planting operations, while shifting laterally during retraction, for example due to encountering filed obstacles or stowed for road transport.

The claimed subject matter is now described with reference to the drawings, wherein like reference numerals are generally used to refer to like elements throughout. In the following description, for purposes of explanation, numerous specific details are set forth in order to provide a thorough understanding of the claimed subject matter. It may be evident, however, that the claimed subject matter may be practiced without these specific details. In other instances, structures and devices are shown in block diagram form in order to facilitate describing the claimed subject matter.

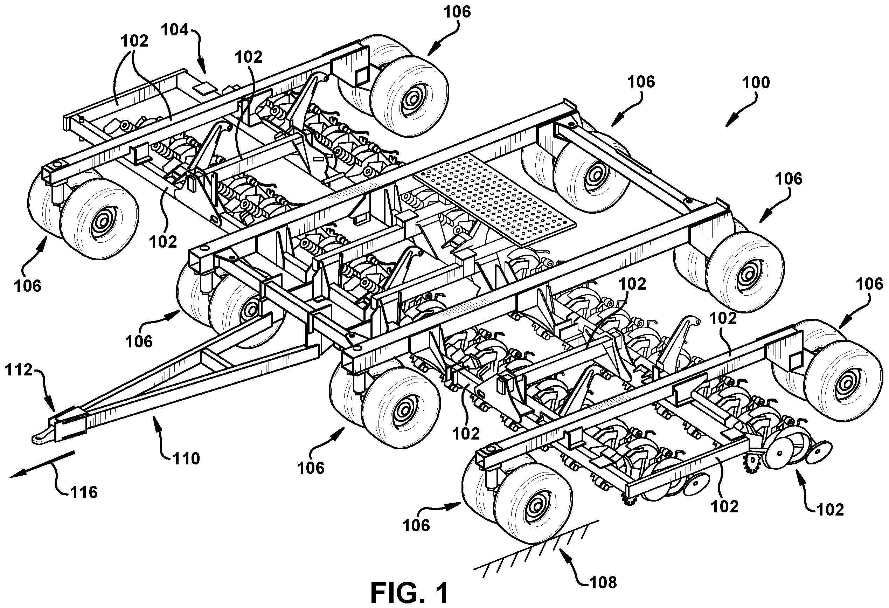

Referring initially to Fig. 1, an exemplary, non-limiting implementation of a seeder assembly 100 is illustrated. The seeder assembly 100 may have one or more interconnected frame members 102 coupled to one another to provide a frame assembly 104. The frame assembly 104 may have one or more ground engaging mechanism 106 rotationally coupled thereto to allow the frame assembly 104 to travel along an underlying surface 108. Further, the frame assembly 104 may have a tongue 110 that has a coupler 112 that is configured to couple the frame assembly 104 to a work machine (not shown), such as a tractor.

The ground engaging mechanisms 106 may maintain a desired spacing between the frame assembly 104 and the underlying surface 108. In one non-exclusive example, the desired spacing of the frame assembly 104 may be fixed by the rotational coupling location of the ground engaging mechanisms 106. In another example, the rotation axis of the ground engaging mechanisms 106 may be selectively altered by a user through a hydraulic or pneumatic cylinder coupled to a corresponding hydraulic or pneumatic system. In this configuration, the desired spacing of the frame assembly 104 relative to the underlying surface 108 may be selectively altered by selectively altering the length of the hydraulic or pneumatic cylinder.

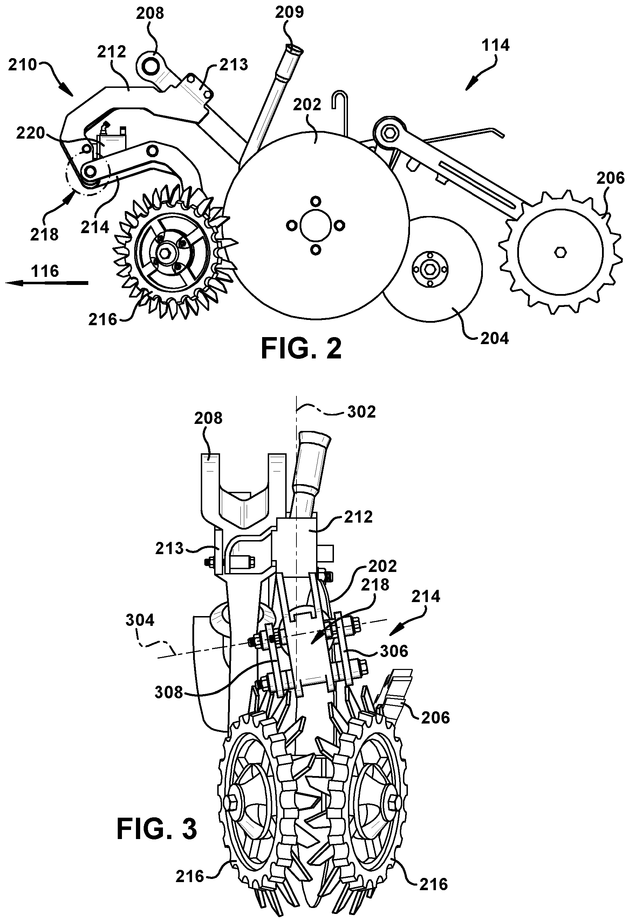

Regardless of the spacing of the frame assembly 104 from the underlying surface 108, the frame assembly 104 may have a plurality of disk opener assemblies 114 coupled thereto. The disk opener assemblies 114 may be spaced along the frame assembly 104 and coupled to a planting system to distribute seed or any other type of commodity into the soil of the underlying surface 108 as the seeder 100 is pulled in a direction of travel 116 by the tractor or the like. More specifically, each opener assembly 114 may have a disk opener 202, a press wheel 204, and a closing wheel 206, among other things (see, e.g., Fig. 2). The opener assemblies 114 may selectively cut an opening into the underlying surface 108 with the disk opener 202 and distribute seed or other commodity therein through an air hose 209 or other conduit that directs the commodity into the opening. A gauge wheel may also be included to ensure the disk opener 202 creates an opening having the desired depth for the commodity. The press wheel 204 may apply a downward force to the commodity after deposition to promote better soil contact. The closing wheel 206 may cover the opening after the commodity has been placed therein.

The disk opener assemblies 114 may be configured to work with any type of commodity distribution system. In one non-exclusive example, the opener assemblies 114 are part of an air seeder system that distributes commodity into the openings created by the disk opener assemblies 114 through an air flow system and conduit. In another example, the opener assemblies 114 are configured to work with grain drill configurations that distribute commodity to the opening through conduit.

In another aspect of this disclosure, the opener assemblies 114 may utilize the disk opener 202 for no till, or reduced till applications. In such scenarios, the seeder 100 may be designed to work fields that have not been tilled or had minimal tilling. In these types of fields, the single disk opener 202 may be configured to substantially cut through any residue remaining on the underlying surface 108 while making the opening for the commodity. Further, using the disk opener 202 with a reduced till configuration may allow for greater vehicle speed during a planting operation compared other openers. However, it is to be appreciated that the techniques and mechanisms described herein may also be applied to planters or seeders having multiple disk openers or that utilize any other known method for forming the opening for a commodity (e.g., shanks).

Turning now to Fig. 2, illustrated is an exemplary, non-limiting implementation of an opening assembly 114 with an associated cleaner assembly 210. The opening assembly 114 includes a disk opener 202, a press wheel 204, a closing wheel 206, and a hose 209 as described above. As further shown in Fig. 2, opening assembly 114 may includes a support 208 with a coupling end to couple the opening assembly 114 to seed assembly 100, for example. According to an aspect, cleaner assembly 210 includes a first arm or support 212 with an engagement portion 213. The engagement portion 213 couples the cleaner assembly 210 to the opening assembly 114. Accordingly, in an aspect, each opening assembly 114 of seed assembly 100 may have an associated cleaner assembly 210.

In one example, the cleaner assembly 210 attaches to the opening assembly at the support 208. As described in greater detail below, this attachment point enables the cleaner assembly 210 to move in concert with the opening assembly 114, which may pivot or hinge via the coupling end between various positions. Moreover, as further described below, the cleaner assembly 210 is configured for additional movement independent of opening assembly 114.

The cleaner assembly 210 further includes a second arm 214. The second arm 214 couples to the first arm 212 to form a pivot 218. At a second end of the second arm 214, opposite to the pivot 218, at least one cleaner blade 216 is rotationally coupled thereto. As noted above, cleaner assembly 210 is configured to remove at least some residue from the underlying surface 108. Residue on the underlying surface 108 can cause issues during planting using a disk opener 202. Such issues may include hairpinning, slowed emergence, or no emergence (e.g., due to residue coverage). Accordingly, in an aspect, the cleaner assembly 210 is positioned along each opener assembly 114 to manipulate any residue on the underlying surface 108 to thereby increase yield and emergence of any seed planted by the opener assembly 114. Among other things, the cleaner assembly 210 may reduce hairpinning and clear the surface of the soil to improve exposure of the soil.

Cleaner assembly 210 further includes an actuator 220 configured to pivot second arm 214 about pivot 218. The actuator 220 may be a mechanical device that is capable of applying a springed force to the second arm 214. In some implementations, the actuator 220 is a pneumatic cylinder that provides a variable springed force to the second arm 214 based on a fluid pressure provided to the pneumatic cylinder. In an aspect of the pneumatic cylinder implementation, an electro-pneumatic system (not shown) may selectively provide fluid to the pneumatic cylinder at a desired fluid pressure. More specifically, the electro-pneumatic system may have a fluid pump or highpressure reservoir that is capable of selectively increasing the fluid pressure applied to the pneumatic cylinder through one or more electrically controlled valve assemblies.

In an example, the electro-pneumatic system may be selectively manipulated through a controller. The controller may have a processor and access to a memory for storing and executing functions for the electro-pneumatic system. In one implementation, the controller may communicate with a user interface to identify a desired spring force input by the user through the user interface. Once the controller has identified the spring force input through the user interface, the controller may direct the electro-pneumatic system to manipulate the requisite valves to provide the desired spring force pressure to the actuator 220, which may be a pneumatic cylinder in this implementation.

In other implementations, actuator 220 may be a component of a hydraulic system. For instance, actuator 220 may be a hydraulic cylinder that may have a corresponding electro-hydraulic system. An accumulator or the like may be utilized to provide the springed response of the actuator 220 discussed herein and the controller and user interface may interact with the electro-hydraulic system similarly as described herein with reference to the electro-pneumatic system.

In further implementations, the actuator 220 may be a mechanical spring. Still further, other implementations may utilize a chain or similar device for the actuator 220 to allow the second arm 214 to pivot about pivot 218 towards the first arm 212, but provide a maximum distance from which the second arm 214 can pivot about the pivot 218 away from the first arm 212.

According to one aspect, the actuator 220 provides a springed force at least partially away from the first arm 212 to ensure that the second arm 214 undulates with obstructions on the underlying surface 108. For example, if the cleaner blade 216 contacts a rock or other similar obstruction, the second arm 214 may be forced to pivot about the pivot 218 in a first direction away from the obstruction. Once the cleaner blade 216 passes over the obstruction, the spring force applied by the actuator 220, or the weight of the second arm 214 and cleaner blade 216, may cause the second arm 214 to pivot about the pivot 218 in a second direction until the cleaner blade 216 contacts the underlying surface 108. In this configuration, the cleaner blade 216 may travel over any underlying obstructions and quickly return to the underlying surface 108 thereafter.

In another aspect, the actuator 220 of the row cleaner assembly 210 may have a maximum length. The maximum length may be the longest length of the actuator 220 under expected operating conditions. As described above, an electro-hydraulic, electro-pneumatic, or mechanical system may be utilized to provide a variable spring force to the second arm 214 and/or cleaner blade 216 through the actuator 220. In any of these examples, the actuator 220 may have a maximum length and actuator 220 will not elongate or extend to a length greater than the maximum length.

The maximum length of the actuator 220 may correspond with the geometry of the assembly 210. For instance, the maximum length may be defined based on a length or shape of first arm 212, a length or shape of second arm 214, a size and shape of the blade 216, and/or geometries associated with the opener assembly 114 to which assembly 210 is coupled.

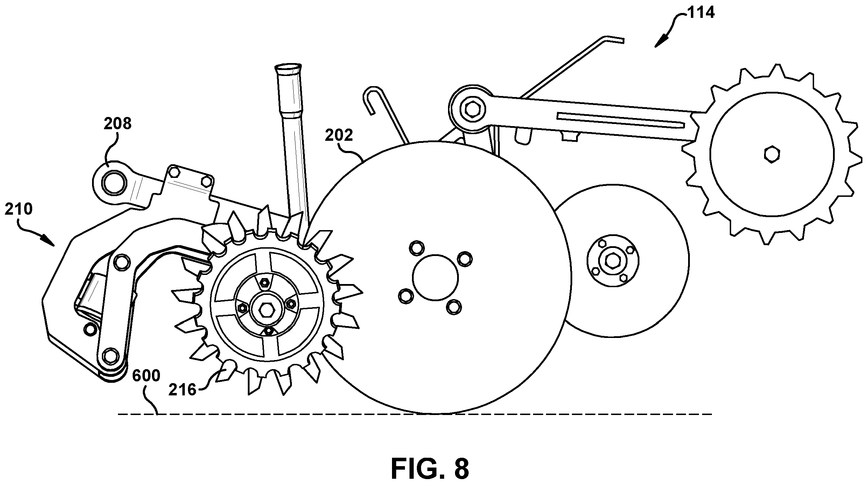

For example, in an aspect, opener assembly 114 is controllable between an operating position (generally shown in Fig. 2) and a raised position (see Fig. 8). The maximum length of actuator 220 may be defined so that the blade 216 readily contacts the underlying surface 108 when the opener assembly 114 is in the operating position.

Cleaner assembly 210 may utilize different types of cleaners. As shown in the figures, the cleaner may be a blade 216. Blade 216 is a substantially circular disk with fingers extending radially away from a central hub. The blade 216 is rotationally coupled to a portion of the second arm 215 that is at least partially spaced from the pivot 208. As shown in Fig. 3, for example, cleaner assembly 210 may include two blades 216. Other implementations contemplated herein may utilized different finger or disk profiles, brushes or the like for row cleaners.

As better shown in Fig. 3, the blades 216 may be angled relative to the direction of travel 116 to deflect debris away from the path of the disk opener 202.

Further, as shown in Fig. 2, the blade 216 trails pivot 218 in the direction of travel 116. Further, the opener assembly and, particularly, the disk opener 202 generally trails the cleaner assembly 214 in the direction of travel 116.

Turning to Fig. 3, a front view of the exemplary, non-limiting implementation of the opening assembly 114 and associated cleaner assembly 210 is illustrated. As shown in Fig. 3, in an example, the cleaner assembly includes twin cleaner blades 216 substantially parallel to one another. In another aspect, blades 216 may be angled toward each other as shown in Fig. 3 to deflect debris away from opener 202. With the twin-bladed arrangement, opener 202 may be partially positioned between the blades 216 in a direction traverse to the direction of travel 116. Further, as described above and shown in Fig. 2, the opener 202 may not fully trail the blades 216 in the direction of travel 116. That is, a leading edge of the opener 202 may lead trailing edges of blades 216 in the direction of travel 116.

In an aspect, the second arm 214 includes a first support or side 306 and a second support or side 308. The first arm 202 couples to the second arm 214 between the first and second supports 306, 308 to form the pivot 218. The first and second supports 306, 308 are substantially parallel to one another and respectively extend from pivot 218 to a rotation coupling with a respective blade 216. For instance, each of support 306 and 308 is respectively coupled to a corresponding blade 216.

According to one aspect of cleaner assembly 210, pivot 218 has an off-axis arrangement as shown in Fig. 3. An axis 302 of the cleaner assembly 210 (or opener assembly 114) is shown in Fig. 3.

In one example, axis 302 is defined relative to the engagement portion 213, which is turn may be based on an orientation of the opener assembly 114 and the seed assembly 100. An axis of rotation 304 of pivot 218 is canted with respect to axis 302. For example, the axis of rotation 304 may not be orthogonal to axis 302.

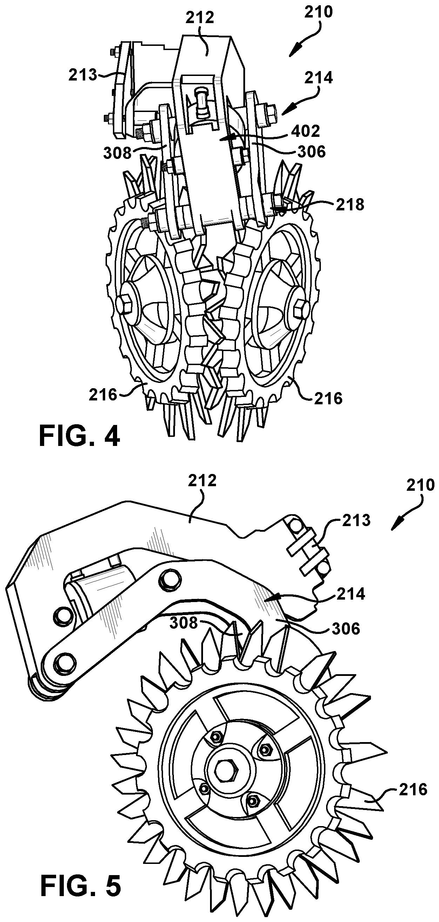

Turning to Fig. 4, a non-limiting, exemplary implementation of cleaner assembly 210 is depicted. According to an example, first arm 212 includes an engagement portion 213 at a first end (see also Fig. 5). First arm 212 includes an angled portion 402 at a second end. The second end, for instance, is opposite the engagement portion and is disposed adjacent to the coupling forming pivot 208. The angled portion 402 of first arm 212, in an aspect, create the off-axis arrangement for cleaner assembly 210.

According to a further aspect, cleaner assembly 210 is movable, via pivot 218, between an engaged or working position and a retracted or lifted position. In one implementation, cleaner assembly 210 is selectively transitioned between the engaged and retracted positions through operation of actuator 220. Thus, pivoting movement of second arm 214 about pivot 218 effects the transition between the engaged and retracted positions.

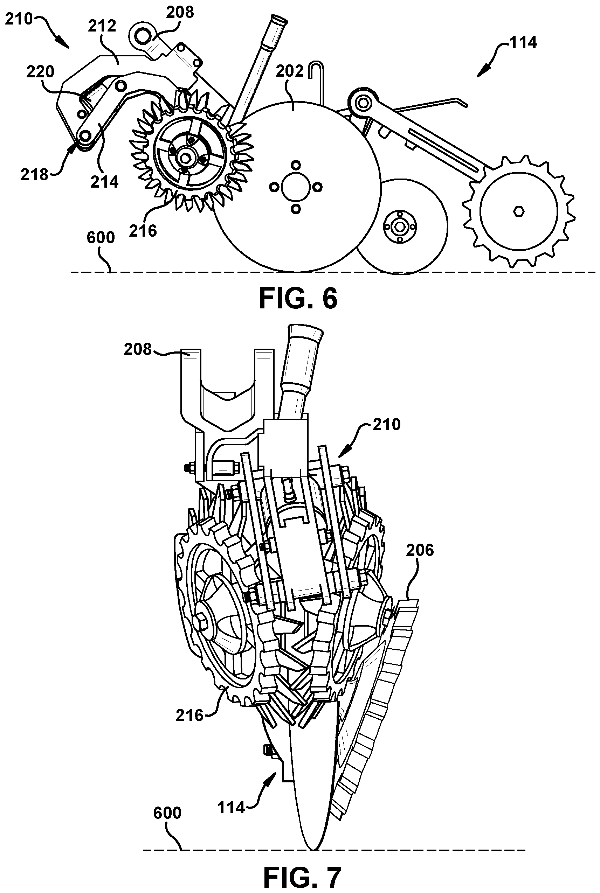

Figs. 2 and 3 depict the cleaner assembly 210 in the engaged position. In the engaged position, blades 216 may contact the underlying surface 108. Figs. 6 and 7 depict the cleaner assembly 210 in the retracted position. As shown in Figs. 6 and 7, when the cleaner assembly 210 is in the retracted position, the blade(s) 216 are positioned above a plane 600 defined by a bottom portion of the opener assembly 114.

In a further aspect, the canted or off-axis arrangement of blades 216 results in a lateral movement (e.g. transverse to the direction of travel 116) when the cleaner assembly 210 moves between the engaged and retracted positions. This is best illustrated in Figs. 3 and 7, where the lateral position of blades 216 can be judged relative to the positions of components of the opener assembly 114 such as the support 208 and/or closing blade 206. In particular, blades 216 laterally shift from a first position shown in Fig. 3 to a second position shown in Fig. 7. When shifting from the engaged position to the retracted position, the blades 216 laterally move away from the lateral position of closing blade 206. When moving from the retracted position to the engaged position, the blades 216 laterally shift toward the lateral position of closing blade 206.

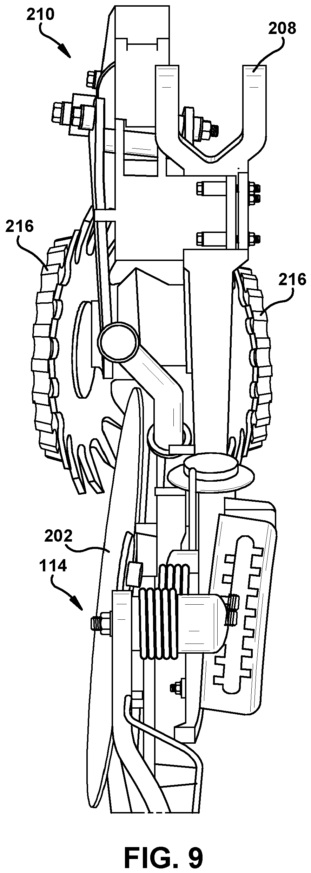

Moreover, as shown in Figs. 2 and 6, the blades 216 move opposite a direction of travel 116 and toward opener 202 when shifting from the engaged position to the retracted position. When moving from the retracted position to the engaged position, the blades 216 move in the direction of travel 116 and away from opener 202. The lateral movement described above enables the blades 216 to avoid disk opener 202 and/or support structures such as support 208 when moving to the retracted position. For instance, with reference to Fig. 3, without lateral movement, blades 216 would contact at least one of support 208 or disk opener 202 if retracted directly opposite the direction of travel 116. As shown in Fig. 7 and Fig. 9, the off-axis pivot described herein creates a lateral movement upon retraction and/or protraction so that the blades fully clear, and do not interfere with, supporting structures or the opener assembly.

Fig. 8 illustrates the cleaner assembly 210 and corresponding opener assembly 114, when the opener assembly is lifted in a road transport position. In the road transport position, the opener assembly 114 is lifted to form a separation from underlying surface 108. Accordingly, when the seed assembly 100 is being transported on a road or other surface (or turning between passes on a field), the opener assembly clears and does not contact the underlying surface 108. As shown in Figs. 8 and 9, the cleaner assembly 210 is also in a retracted position. The blades 216 remain above plane 600 even when the opener assembly is lifted to the road transport position. Further, the off axis pivot of the cleaner assembly 210 enables the blades 216 to clear structures of the opener assembly 114 in the road transport position.

In another example, pivot 218 may include a camming mechanism to generate the lateral movement of blades 216 described above. That is, the pivot 218 may have an associated cam that creates the lateral or twisting movement of blades 216 when the cleaner assembly 210 transitions to a retracted or lifted position.

According to an aspect, a seeder assembly for placing a commodity in underlying soil is provided. The seeder assembly includes a frame having at least one ground engaging mechanism configured to contact an underlying surface. The seeder assembly also includes at least one opener assembly pivotally coupled to the frame, the at least one opener having at least one disk opener configured to cut into the underlying soil to provide an opening for the commodity. In addition, the seeder assembly includes at least one row cleaner assembly coupled to the frame, the at least one row cleaner having at least one cleaner blade pivotably movable between at least an engaged position and a lifted position. Further, the at least one cleaner blade is positioned above a plane defined by a bottom portion of the at least one opener assembly when the at least one cleaner blade is in the lifted position.

In an example, the at least one row cleaner assembly includes two cleaner blades positioned in a substantially parallel arrangement. The at least one disk opener trails the two cleaner blades relative to a traveling direction. The at least one disk opener is partially positioned between the two cleaner blades. The two cleaner blades clear the at least one disk opener in the lifted position. In another example, the at least one cleaner blade is biased in the engaged positioned with a springing force. In this example, the at least one cleaner blade is partially deflectable from the engaged position responsive to an external force, and wherein the springing force returns the at least one cleaner blade to the engaged position when the external force is removed.

In another example, the at least one cleaner blade trails a pivot to which the at least one cleaner blade is coupled, and wherein the at least one cleaner blade moves towards the at least one disk opener when transitioning from the engaged position to the lifted position. In an example, the at least one opener assembly is pivotally movable between a working position and a transport position, and wherein the at least one row cleaner assembly pivots with the at least one opener assembly.

In another aspect, a row cleaner assembly is provided. The row cleaner assembly includes a first arm having an engagement portion configured to couple to at least one of an opener assembly or a seed assembly. The row cleaner assembly also includes a second arm having at least one cleaner blade rotationally coupled thereto. In addition, the row cleaner assembly includes a pivot formed between the first arm and the second arm, wherein a rotational axis of the pivot is canted relative to an axis of the row cleaner assembly.

According to an example, the pivot is configured to move the at least one cleaner blade between an engaged position and a retracted position. In another example, the pivot leads the at least one cleaner blade in a traveling direction. According to a further example, the second arm includes a first support and a second support, wherein the first arm couples between the first support and the second support to form the pivot. In this example, the row cleaner assembly includes two cleaner blades rotationally coupled to the second arm, wherein one blade is coupled to the first support and another blade is coupled to the second support. The two cleaner blades are angled towards each at a leading position. The first support and the second support are substantially parallel.

According to yet another example, the row cleaner assembly includes an actuator coupled to the second arm and configured to pivotably move the second arm between an engaged position and a retracted position. In this example, the second arm rotates towards the first arm when brought into the retracted position and rotates away from the first arm when brother into the engaged position.

In another example, the axis of the row cleaner assembly is at least one of a vertical axis or a longitudinal axis relative to the engagement portion of the first arm.

According to yet another aspect, a row cleaner assembly is provided. The row cleaner assembly includes a first arm having an engagement portion at a first end and an angled portion at a second end. The engagement portion is configured to couple the row cleaner assembly to at least one of an opener assembly or a seed assembly. The angled portion is angled with respect to at least two axes of the row cleaner assembly. The row cleaner assembly also includes a second arm having a first end coupled to the angled portion at the second end of the first arm to form a pivot. The second arm extends from the pivot in a direction substantially counter to a traveling direction. In addition, the row cleaner assembly includes a pair of row cleaner blades rotationally coupled to a second end of the second arm. A first row cleaner blade is mounted on a first side of the second end of the second arm and a second row cleaner blade is mounted on a second side, opposed from the first side. Further, the row cleaner assembly includes an actuator configured to pivotably transition the pair of row cleaner blades between a working position and a retracted position. The actuator further provides springing force to enable partial deflection of the pair of row cleaner blades from full engagement in the working position.

The foregoing description and examples has been set forth merely to illustrate the disclosure and are not intended as being limiting. Each of the disclosed aspects and embodiments of the present disclosure may be considered individually or in combination with other aspects, embodiments, and variations of the disclosure. In addition, unless otherwise specified, none of the steps of the methods of the present disclosure are confined to any particular order of performance. Modifications of the disclosed embodiments incorporating the spirit and substance of the disclosure may occur to persons skilled in the art and such modifications are within the scope of the present disclosure. Furthermore, all references cited herein are incorporated by reference in their entirety.

Terms of orientation used herein, such as "top," "bottom," "horizontal," "vertical," "longitudinal," "lateral," and "end" are used in the context of the illustrated embodiment. However, the present disclosure should not be limited to the illustrated orientation. Indeed, other orientations are possible and are within the scope of this disclosure. Terms relating to circular shapes as used herein, such as diameter or radius, should be understood not to require perfect circular structures, but rather should be applied to any suitable structure with a cross-sectional region that can be measured from side-to-side. Terms relating to shapes generally, such as "circular" or "cylindrical" or "semi-circular" or "semi-cylindrical" or any related or similar terms, are not required to conform strictly to the mathematical definitions of circles or cylinders or other structures, but can encompass structures that are reasonably close approximations.

Conditional language used herein, such as, among others, "can," "might," "may," "e.g.," and the like, unless specifically stated otherwise, or otherwise understood within the context as used, is generally intended to convey that some embodiments include, while other embodiments do not include, certain features, elements, and/or states. Thus, such conditional language is not generally intended to imply that features, elements, blocks, and/or states are in any way required for one or more embodiments or that one or more embodiments necessarily include logic for deciding, with or without author input or prompting, whether these features, elements and/or states are included or are to be performed in any particular embodiment.

Conjunctive language, such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

The terms "approximately," "about," and "substantially" as used herein represent an amount close to the stated amount that still performs a desired function or achieves a desired result. For example, in some embodiments, as the context may dictate, the terms "approximately", "about", and "substantially" may refer to an amount that is within less than or equal to 10% of the stated amount. The term "generally" as used herein represents a value, amount, or characteristic that predominantly includes or tends toward a particular value, amount, or characteristic. As an example, in certain embodiments, as the context may dictate, the term "generally parallel" can refer to something that departs from exactly parallel by less than or equal to 20 degrees.

Unless otherwise explicitly stated, articles such as "a" or "an" should generally be interpreted to include one or more described items. Accordingly, phrases such as "a device configured to" are intended to include one or more recited devices. Such one or more recited devices can be collectively configured to carry out the stated recitations. For example, "a processor configured to carry out recitations A, B, and C" can include a first processor configured to carry out recitation A working in conjunction with a second processor configured to carry out recitations B and C.

The terms "comprising," "including," "having," and the like are synonymous and are used inclusively, in an open-ended fashion, and do not exclude additional elements, features, acts, operations, and so forth. Likewise, the terms "some," "certain," and the like are synonymous and are used in an open-ended fashion. Also, the term "or" is used in its inclusive sense (and not in its exclusive sense) so that when used, for example, to connect a list of elements, the term "or" means one, some, or all of the elements in the list.

Overall, the language of the claims is to be interpreted broadly based on the language employed in the claims. The language of the claims is not to be limited to the non-exclusive embodiments and examples that are illustrated and described in this disclosure, or that are discussed during the prosecution of the application.

Although systems and methods for row cleaners have been disclosed in the context of certain embodiments and examples, this disclosure extends beyond the specifically disclosed embodiments to other alternative embodiments and/or uses of the embodiments and certain modifications and equivalents thereof. Various features and aspects of the disclosed embodiments can be combined with or substituted for one another in order to form varying modes of systems and methods for row cleaners. The scope of this disclosure should not be limited by the particular disclosed embodiments described herein.

Certain features that are described in this disclosure in the context of separate implementations can be implemented in combination in a single implementation. Conversely, various features that are described in the context of a single implementation can be implemented in multiple implementations separately or in any suitable subcombination. Although features may be described herein as acting in certain combinations, one or more features from a claimed combination can, in some cases, be excised from the combination, and the combination may be claimed as any subcombination or variation of any subcombination.

While the methods and devices described herein may be susceptible to various modifications and alternative forms, specific examples thereof have been shown in the drawings and are herein described in detail. It should be understood, however, that the invention is not to be limited to the particular forms or methods disclosed, but, to the contrary, the invention is to cover all modifications, equivalents, and alternatives falling within the spirit and scope of the various embodiments described and the appended claims. Further, the disclosure herein of any particular feature, aspect, method, property, characteristic, quality, attribute, element, or the like in connection with an embodiment can be used in all other embodiments set forth herein. Any methods disclosed herein need not be performed in the order recited. Depending on the embodiment, one or more acts, events, or functions of any of the algorithms, methods, or processes described herein can be performed in a different sequence, can be added, merged, or left out altogether (e.g., not all described acts or events are necessary for the practice of the algorithm). In some embodiments, acts or events can be performed concurrently, e.g., through multi-threaded processing, interrupt processing, or multiple processors or processor cores or on other parallel architectures, rather than sequentially. Further, no element, feature, block, or step, or group of elements, features, blocks, or steps, are necessary or indispensable to each embodiment. Additionally, all possible combinations, subcombinations, and rearrangements of systems, methods, features, elements, modules, blocks, and so forth are within the scope of this disclosure. The use of sequential, or time-ordered language, such as "then," "next," "after," "subsequently," and the like, unless specifically stated otherwise, or otherwise understood within the context as used, is generally intended to facilitate the flow of the text and is not intended to limit the sequence of operations performed. Thus, some embodiments may be performed using the sequence of operations described herein, while other embodiments may be performed following a different sequence of operations.

Moreover, while operations may be depicted in the drawings or described in the specification in a particular order, such operations need not be performed in the particular order shown or in sequential order, and all operations need not be performed, to achieve the desirable results. Other operations that are not depicted or described can be incorporated in the example methods and processes. For example, one or more additional operations can be performed before, after, simultaneously, or between any of the described operations. Further, the operations may be rearranged or reordered in other implementations. Also, the separation of various system components in the implementations described herein should not be understood as requiring such separation in all implementations, and it should be understood that the described components and systems can generally be integrated together in a single product or packaged into multiple products. Additionally, other implementations are within the scope of this disclosure.

Some embodiments have been described in connection with the accompanying figures. Certain figures are drawn and/or shown to scale, but such scale should not be limiting, since dimensions and proportions other than what are shown are contemplated and are within the scope of the embodiments disclosed herein. Distances, angles, etc. are merely illustrative and do not necessarily bear an exact relationship to actual dimensions and layout of the devices illustrated. Components can be added, removed, and/or rearranged. Further, the disclosure herein of any particular feature, aspect, method, property, characteristic, quality, attribute, element, or the like in connection with various embodiments can be used in all other embodiments set forth herein. Additionally, any methods described herein may be practiced using any device suitable for performing the recited steps.

The methods disclosed herein may include certain actions taken by a practitioner; however, the methods can also include any third-party instruction of those actions, either expressly or by implication.

The ranges disclosed herein also encompass any and all overlap, subranges, and combinations thereof. Language such as "up to," "at least," "greater than," "less than," "between," and the like includes the number recited. Numbers preceded by a term such as "about" or "approximately" include the recited numbers and should be interpreted based on the circumstances (e.g., as accurate as reasonably possible under the circumstances, for example ±5%, ±10%, ±15%, etc.). For example, "about 1 V" includes "1 V." Phrases preceded by a term such as "substantially" include the recited phrase and should be interpreted based on the circumstances (e.g., as much as reasonably possible under the circumstances). For example, "substantially perpendicular" includes "perpendicular." Unless stated otherwise, all measurements are at standard conditions including temperature and pressure.

In summary, various embodiments and examples of systems and methods for multiplex air cart have been disclosed. Although the systems and methods for multiplex air cart have been disclosed in the context of those embodiments and examples, this disclosure extends beyond the specifically disclosed embodiments to other alternative embodiments and/or other uses of the embodiments, as well as to certain modifications and equivalents thereof. This disclosure expressly contemplates that various features and aspects of the disclosed embodiments can be combined with, or substituted for, one another. Thus, the scope of this disclosure should not be limited by the particular disclosed embodiments described herein, but should be determined only by a fair reading of the claims that follow.

## Claims

1. A seeder assembly (100) for placing a commodity in underlying soil, comprising:
a frame (104) having at least one ground engaging mechanism (106) configured to contact an underlying surface;
at least one opener assembly (114) pivotally coupled to the frame (104), the at least one opener (114) having at least one disk opener (202) configured to cut into the underlying soil to provide an opening for the commodity;
at least one row cleaner assembly (210) coupled to the frame (104), the at least one row cleaner having at least one cleaner blade (216) pivotably movable between at least an engaged position and a lifted position,
wherein the at least one cleaner blade (216) is positioned above a plane (600) defined by a bottom portion of the at least one opener assembly (114) when the at least one cleaner blade (216) is in the lifted position.

2. The seeder assembly (100) of claim 1, wherein the at least one row cleaner assembly (210) includes two cleaner blades (216), and wherein the at least one disk opener (202) trails the two cleaner blades (216) relative to a traveling direction.

3. The seeder assembly (100) of claim 2, wherein the at least one disk opener (202) is partially positioned between the two cleaner blades (216), and wherein the two cleaner blades (216) clear the at least one disk opener (202) in the lifted position.

4. The seeder assembly (100) of one of the claims 2 or 3, wherein the two cleaner blades (216) are biased in the engaged positioned with a springing force, and wherein the two cleaner blades (216) are partially deflectable from the engaged position responsive to an external force, and wherein the springing force returns the at least one cleaner blade (216) to the engaged position when the external force is removed.

5. The seeder assembly (100) of one of the claims 2 to 4, wherein the two cleaner blades (216) trail a pivot (218) to which the cleaner blades (216) are coupled, and wherein the two cleaner blades (216) move towards the at least one disk opener (202) when transitioning from the engaged position to the lifted position.

6. The seeder assembly (100) of one of the claims 2 to 5, wherein the at least one opener assembly (114) is pivotally movable between a working position and a transport position, and wherein the at least one row cleaner assembly (210) pivots with the at least one opener assembly (114).

7. The seeder assembly (100) of claim 5 or 6, wherein the row cleaner assembly (210), further comprising:
a first arm (212) having an engagement portion (213) coupled to the opener assembly (114);
a second arm (214) having the two cleaner blades (216) rotationally coupled thereto; and
the pivot (218) formed between the first arm (212) and the second arm (214), wherein a rotational axis (304) of the pivot (218) is canted relative to an vertical axis (302) of the row cleaner assembly (210).

8. The seeder assembly (100) of one of the claims 5 to 7, wherein the pivot (218) is configured to move the two cleaner blades (216) between an engaged position and a retracted position.

9. The seeder assembly (100) of one of the claims 5 to 9, wherein the pivot (218) leads the two cleaner blades (216) in a traveling direction (116).

10. The seeder assembly (100) of one of the claims 7 to 9, wherein the second arm (214) includes a first support (306) and a second support (308), wherein the first arm (212) couples between the first support (306) and the second support (308) to form the pivot (218).

11. The seeder assembly (100) of claim 10, wherein one blade (216) of the two cleaner blades (216) is coupled to the first support (306) and the other blade (216) of the two cleaner blades (216) is coupled to the second support (308).

12. The seeder assembly (100) of one of the claims 2 to 11, wherein the two cleaner blades (216) are angled towards each at a leading position.

13. The seeder assembly (100) of one of the claims 10 to 12, wherein the first support (306) and the second support (308) are substantially parallel.

14. The seeder assembly (100) of one of the claims 7 to 13, further comprising an actuator (220) coupled to the second arm (214) and configured to pivotably move the second arm (214) between an engaged position and a retracted position, and
wherein the second arm (214) rotates towards the first arm (212) when brought into the retracted position and rotates away from the first arm (212) when brother into the engaged position.
